# EUROPEAN PATENT SPECIFICATION

(11) **EP 3 747 117 B1**
(45) Date of publication and mention of the grant of the patent: **25.08.2021**
(21) Application number: 19711287.3
(22) Date of filing: 12.03.2019
(51) Int. Cl.: H02M 3/156, H02M 1/00

(54) **EMERGENCY LIGHTING BUCK CONVERTER**
NOTBELEUCHTUNGSABWÄRTSWANDLER
CONVERTISSEUR ABAISSEUR DE TENSION D'ÉCLAIRAGE DE SECOURS

(30) Priority: 12.03.2018 GB 201804248
(43) Date of publication of application: 09.12.2020
(60) Divisional application: 21154897.9
(73) Proprietor: Tridonic GmbH & Co. KG, 6851 Dornbirn (AT)
(72) Inventor: SHUKLA, Jagjitpati, Durham DL16 6DR (GB); MAKWANA, Deepak, Newcastle Upon Tyne Tyne and Wear NE5 2DJ (GB)
(74) Representative: Rupp, Christian
(86) International application number: PCT/EP2019/056080
(87) International publication number: WO 2019/175134

(56) References cited:
- DE-A1-102009 017 139
- US-A1- 2012 133 285

## Description

The invention relates to a buck converter for supplying a battery, as well as to an LED converter, such as for example an emergency light LED converter, and a method for operating a buck converter for supplying a battery and an LED converter.

The invention relates to a particularly kind of buck converter in which the buck switch is ground-referenced.

Such a buck converter may find application as a charging circuitry for being supplied with a DC voltage derived from an AC mains voltage for example, for charging at its output terminals, a battery. This battery may be used in order to drive lighting means, such as for example a LED load, in the framework of emergency lighting means. To that regard, one or more additional converter stages may be arranged between the battery supply voltage and the lighting means.

Typically, a control circuitry, such as for example an ASIC or a microcontroller, is provided which controls at least the buck switch between the conducting and the non-conducting state. In addition, typically, the control circuitry is supplied with a plurality of feedback signals on the basis of which the control circuitry determines the appropriate switching-over operations of the buck switch.

A typical control approach is that during the conducting state of the buck switch, the current through the switch is monitored and the switch is controlled into the non-conducting state as soon as the increasing buck switch current reaches a given switching-off threshold.

Once the buck switch is switched off, the LED current continues to be driven via an inductor of the buck converter in a freewheeling path comprising a diode.

Typically, it has to be determined when this decaying current, driven by the inductor, reaches the zero level. In the so-called critical conduction mode, the conducting state of the switch is immediately controlled as soon as the current reaches the zero level. In the discontinuous mode a given time period is allowed to lapse between the inductor current reaching the zero level and the switching-on of the buck switch.

Furthermore, the control parameters, such as for example the switching-off threshold for the buck switch current, have to be adapted to feedback-control the required battery voltage. To that regard, the control circuitry needs a feedback information as to the current level of the battery voltage. Thus, typically a plurality of feedback paths with matching input pins of the control circuitry have to be provided for the buck switch current, the timing of the zero crossing of the freewheeling current (inductor current), the battery voltage, and typically also the supplying DC bus voltage.

DE 10 2009 017139 A1 discloses a buck converter configured to detect various control parameters using two input pins of the control circuitry.

US 2012/133285 A1 discloses a converter configured to detect various control parameters using a single input pin of the control circuitry.

The invention now targets of a simplification of this feedback path in order to reduce the required number of input pins at the control circuitry.

This object is achieved via the means of the independent claims. The depending claims develop further the central idea of the invention.

According to a first aspect of the invention, a buck converter for supplying a battery is provided. The buck converter comprises a series connection of a diode and a buck switch, the series connection being connected between a DC bus voltage (which may have a ripple) and a ground reference. An inductor is connected at its first terminal to a connection point of the diode and the buck switch. A series connection of two resistors is provided in parallel to the buck switch. A control circuitry is provided for controlling the buck switch. A feedback path is connected from a connection point between the resistors to the control circuitry. Output terminals are provided, wherein one of the output terminals is connected to the DC bus voltage, and the other one of the output terminals is connected to the ground reference, and an emergency lighting mode switch arranged between a second terminal of the inductor and the other one of the output terminals, wherein when the battery is connected between the one of the output terminals and the second terminal of the inductor, the emergency lighting mode switch is configured to disconnect the battery from the ground reference in a charging mode of the battery, and to connect the battery to the ground reference in an emergency lighting mode for supply of a converter stage connectable to the output terminals from the battery.

The inductor, the diode and the battery form a freewheeling path for a current driven by the inductor in the non-conducting state of the buck switch.

The control circuitry is designed to evaluate the signal on the feedback path as a signal indicating the current through the buck switch when the control circuitry controls the buck switch to be conducting, by comparing this signal in this time period with a switching-off threshold value. As soon as the inductor current reaches the threshold value, the control circuitry controls the buck switch into the non-conducting state.

The control circuitry may be designed to evaluate and sample a signal on the feedback path as a signal indicating the DC bus voltage in the period following the control of the buck switch into the non-conducting state and prior to the freewheeling current in this period reaching the zero level.

The control circuitry may be designed to evaluate and sample the signal on the feedback path as a signal indicating the DC bus voltage minus the battery voltage when the current through the battery has decayed to zero. As previously, the DC bus voltage has been sampled, thus the value of the battery voltage can be computed.

The battery may be charged by the buck converter when an AC voltage is present on the input terminals of the LED converter. In case that the AC voltage on the input terminals of the LED converter falls below a certain level or even is interrupted, than the buck converter will stop to charge the battery.

Such a condition may be an emergency lighting event where emergency lighting is necessary.

A buck converter not forming part of the invention for supplying a battery comprises:
- a series connection of a diode and a buck switch, the series connection being connected between a DC bus voltage and a ground reference,
- an inductor connected at its first side to the midpoint of the diode and the buck switch,
- a control circuitry for controlling the buck switch,
   and
- output terminals connected to a battery, wherein one output terminal is connected to the DC bus voltage, and the other terminal is connected to the second side of the inductor.

Thereby the buck converter is designed such that the control circuitry detects at least the following information on the basis of a signal at the same node:
- the current level through the buck switch while the buck switch is controlled in the conducting state,
- the voltage level at the output terminals, and
- the timing of the zero crossing of the inductor current when the buck switch is in the non-conducting state.

A further aspect of the invention relates to a LED converter, especially an emergency light LED converter, comprising a buck converter as explained above, and at least one LED, which can be supplied starting from the battery voltage.

The invention further relates to a method for operating a buck converter for supplying a battery.

A further aspect relates to a control circuitry designed for implementing such a method.

Further aspects, features and advantages of the invention will become evident to the skilled person when reading the following explanations of a preferred embodiment of the invention, when taken in conjunction with the figure of the enclosed drawings.

The sole figure shows a buck converter which is generally referenced with the numeral 1.

Typically, the buck converter 1 is supplied starting from an AC voltage 18, which may be rectified by an AC/DC block 17, which may comprise also a PFC (power factor correction) functionality. If the PFC is an actively controlled PFC, a control circuitry 15 may issue a control command to one or more switches of the PFC unit. The AC/DC block 17 may be formed by a flyback converter acting as isolated PFC or may be formed by a non-isolated converter like a boost converter acting as PFC followed by a flyback converter which takes over the isolating functionality.

The output of block AC/DC 17 is typically stabilized by a capacitor 16. The voltage at the output terminals of AC/DC block 17, thus the voltage across the capacitor 16 will now be referred to as DC bus voltage (or rail voltage) with the reference numeral V_{DC}. A ripple with twice the frequency of the AC voltage 18 may be present on this DC bus voltage V_{DC}.

The DC bus voltage V_{DC} is supplied to the buck converter 1.

The buck converter has a switch 4, which is ground referenced. A low ohmic resistor 10 (e.g. in the order of 1 to 10 ohms) may be connected between the ground potential and the switch 4.

The switch is connected in series with a diode 8. The diode 8 forms a freewheeling path together with an inductor 9 and a battery 2.

The battery 2 is charged by the current produced by the buck converter 1 and thus represents the load of the buck converter 1.

The battery 2 is charged by the buck converter 1 when an AC voltage 18 is present on the input terminals of the LED converter. In case that the AC voltage 18 on the input terminals of the LED converter falls below a certain level or even is interrupted than the buck converter 1 will stop to charge the battery 2. Such a condition may be an emergency lighting event where emergency lighting is necessary.

The inductor 9 at its one end is connected to the midpoint of the switch 4 and diode 8.

The other end of the inductor 9 is connected to the ground potential.

The battery 2 may be disconnected by a switch 5, wherein the switch 5 may also be controlled by a control signal from the control circuitry 15. The switch 5 may be formed by a MOSFET. Switch 5 is closed in the emergency lighting mode to connect the negative pole of battery 2 to the ground, so that the battery 2 can in the emergency lighting mode supply the converter stage 6 from the battery efficiently by reducing the forward drop across the anti-parallel diode of switch 5 (as it is a MOSFET). During battery charging mode of the battery 2, the switch 5 remains off since the battery 2 remains floating in this battery charging mode.

The output terminals 3, 3' of the buck converter 1, at which the voltage of the battery 2 occurs, are used to drive the LED load 7 through one or more converter stages 6. The one or more converter stages 6 may comprise switch converter stages, e.g. a boost converter, a tapped boost converter or a buck-boost converter. The control signal for the switch converter stage(s) may be produced by the control circuitry 15 or an additional control circuitry 19.

The additional control circuitry 19 may communicate with the first mentioned control circuitry 15 through a communication path 25.

The LED load may be driven in an emergency lighting mode, e.g. when the AC voltage 18 on the input terminals of the LED converter falls below a certain level or even is interrupted

Importantly, according to the invention a series connection of two resistors 11, 12 is arranged in parallel to the buck switch 4.

A feedback path is connected between the midpoint 30 of the resistors 11, 12 and an input pin 13 of the control circuitry 15.

As illustrated, further feedback path may be present for the control circuitry 15, such for example a path 35 carrying a signal representing the AC voltage (especially in view of emergency light applications). However, preferably no further feedback path is required for the operation of the buck converter 1, i.e. all feedback signals required for the operation of the buck converter 1 are sent to the control circuitry 15 at the sole input pin 13.

Now the operation of the circuitry will be explained.

When the control circuitry 15 controls the buck converter switch 4 in the conducting state, the current through the buck switch 4 increases, charging the buck inductor. The increasing current produces a signal at the midpoint of the resistor 30 of the resistors 11, 12 thus that the control circuitry 15 can monitor a signal representing the increasing current through the buck switch 4.

When the increasing current is determined to reach a given switching-off threshold, the control circuitry 15 controls this buck switch 4 into the non-conducting state. In this time period the inductor 9 continues to drive the battery current in the freewheeling path comprising at least the inductor 9, the diode 8 and the battery 2. This freewheeling current decreases until the freewheeling current (discharging current of the inductor 9) reaches the zero crossing level.

During this discharging phase (this is the time period between switching off the buck switch 4 and the inductor current 9 reaching the zero level), the sole feedback pin 13 of the control circuitry 15 measures the level of the bus voltage V_{DC}. Preferably, the control circuitry 15 is designed to sample a value representing the DC bus voltage towards the end of the discharging phase of the inductor current 9, such that the effect of the discharging current is reduced.

Thus, during this discharging phase for the inductor current, the DC bus voltage is sampled and held within the control circuitry 15.

As soon as the inductor current reaches the zero crossing level, the voltage at the input pin 13 rapidly changes to a value, which corresponds to the difference between the DC bus voltage reduced by the voltage across the battery 2. The control circuitry is designed to sample this voltage and correspondingly compute the current value of the voltage of the battery 2 in view of the previously sampled value for the DC bus voltage.

In addition, the timing of the rapid change of the voltage at the feedback input pin 13 of the control circuitry 15 represents the timing of the zero crossing of the inductor current. This timing information can be used in order to determine the next switching-on cycle timing of the buck switch 4, be it in the critical mode or in the non-continuous mode of the buck converter 1.

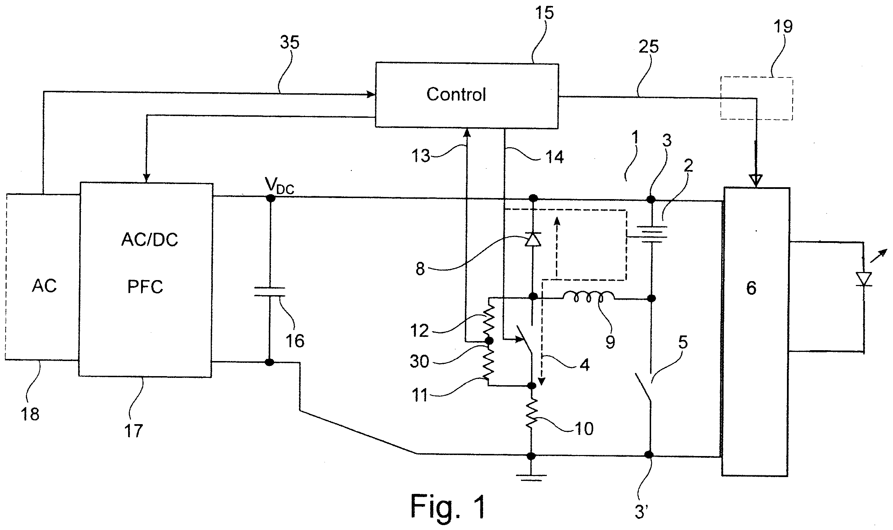

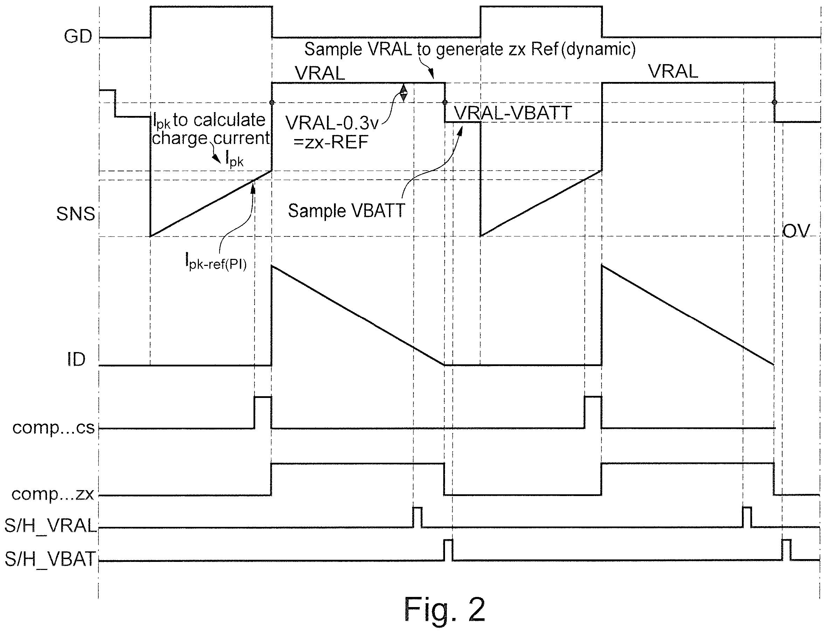

As shown in figures 1 and 2, thus a single feedback pin 13 is sufficient in order to convey to the control circuitry 15 the information as to the zero crossing timing, the value of the increasing switch current during the switching-on phase of the buck switch 4, as well as the battery voltage and even the level of the DC bus voltage V_{DC}.

## Claims

1. Buck converter for supplying a battery (2),
comprising:
- a series connection of a diode (8) and a buck switch (4), the series connection being connected between a DC bus voltage (V_{DC}) and a ground reference, wherein the cathode of the diode (8) is connected to the DC bus voltage (V_{DC}) and the anode of the diode (8) is connected to the buck switch (4),
- an inductor (9) connected at its first terminal to a connection point between the diode (8) and the buck switch (4),
- a series connection of two resistors (11, 12) connected in parallel to the buck switch (4)
- a control circuitry (15) for controlling the buck switch (4),
wherein a feedback path is connected from a connection point between the resistors (11, 12) to the control circuitry (15),
- two output terminals (3, 3'), wherein one (3) of the output terminals (3, 3') is connected to the DC bus voltage (V_{DC}), and the other one (3') of the output terminals (3, 3') is connected to the ground reference,
**characterized by** further comprising
- an emergency lighting mode switch (5) connected between a second terminal of the inductor (9) and the other one (3') of the output terminals (3, 3'), wherein, when the battery (2) is connected with a positive pole to the one (3) of the output terminals (3, 3') and with a negative pole to the second terminal of the inductor (9), the emergency lighting mode switch (5) is configured to :
- disconnect the battery (2) from the ground reference in a charging mode of the battery (2), and
- connect the battery (2) to the ground reference in an emergency lighting mode such as to supply from the battery (2) an LED converter stage (6) connectable to the output terminals (3, 3').

2. The buck converter of claim 1,
wherein the control circuitry (15) is configured to evaluate a signal on the feedback path as a signal indicating the current through the buck switch (4) when the control circuitry (15) controls the buck switch (4) to be conducting, by comparing it with a switching-off threshold.

3. The buck converter of claim 1 or 2,
wherein the control circuitry is configured to evaluate and sample a signal on the feedback path as a signal indicating the DC bus voltage in the period following the control of the buck switch into the non-conducting state.

4. The buck converter of any of claim 3,
wherein the control circuitry is configured to evaluate and sample the signal on the feedback path as a signal indicating the DC bus voltage minus the battery voltage when the current through the battery has decayed to zero.

5. An LED converter comprising a buck converter according to any of the preceding claims, and at least one LED which configured to be supplied starting from the battery voltage.

6. A method for operating a buck converter for supplying a battery (2), the buck converter comprising:
- a series connection of a diode (8) and a buck switch (4), the series connection being connected between a DC bus voltage (V_{DC}) and a ground reference, wherein the cathode of the diode (8) is connected to the DC bus voltage (V_{DC}) and the anode of the diode (8) is connected to the buck switch (4),
- an inductor (9) connected at its first terminal to a connection point between the diode (8) and the buck switch (4),
- a series connection of two resistors (11, 12) connected in parallel to the buck switch (4)
- a control circuitry (15) for controlling the buck switch (4),
- two output terminals (3, 3'), wherein one (3) of the output terminals (3, 3') is connected to the DC bus voltage (V_{DC}), and the other one (3') of the output terminals (3, 3') is connected to the ground reference,
**characterized by** further comprising
- an emergency lighting mode switch (5) connected between a second terminal
of the inductor (9) and the other one (3') of the output terminals (3, 3'), the method comprising:
- controlling the buck switch (4) on the basis of a signal on a feedback path connected from a connection point between the resistors (11, 12) to the control circuitry (15), and, when the battery (2) is connected with a positive pole to the one (3) of the output terminals (3, 3') and with a negative pole to the second terminal of the inductor (9), controlling the emergency lighting switch (5) to:
- disconnect the battery (2) from the ground reference in a charging mode of the battery (2), and
- connect the battery (2) to the ground reference in an emergency lighting mode such as to supply from the battery (2) an LED converter stage (6) connectable to the output terminals (3, 3').

7. A control circuitry (15) configured to implement a method according to claim 6.

## Patentansprüche

1. Abwärtswandler zur Versorgung einer Batterie (2),
umfassend:
- eine Reihenschaltung einer Diode (8) und eines Abwärtsschalters (4), wobei die Reihenschaltung zwischen eine DC-Busspannung (V_{DC}) und eine Massereferenz geschaltet ist, wobei die Kathode der Diode (8) mit der DC-Busspannung (V_{DC}) verbunden ist und die Anode der Diode (8) mit dem Abwärtsschalter (4) verbunden ist,
- einen Induktor (9), der an seinem ersten Anschluss mit einem Verbindungspunkt zwischen der Diode (8) und dem Abwärtsschalter (4) verbunden ist,
- eine Reihenschaltung von zwei Widerständen (11, 12), die parallel zu dem Abwärtsschalter (4) geschaltet sind,
- eine Steuerschaltung (15) zum Steuern des Abwärtsschalters (4),
wobei ein Rückkopplungspfad von einem Verbindungspunkt zwischen den Widerständen (11, 12) mit der Steuerschaltung (15) verbunden ist,
- zwei Ausgangsanschlüsse (3, 3'), wobei einer (3) der Ausgangsanschlüsse (3, 3') mit der DC-Busspannung (V_{DC}) VERBUNDEN IST und der andere (3') der Ausgangsanschlüsse (3, 3') mit der Massereferenz verbunden ist,
**dadurch gekennzeichnet, dass** er ferner umfasst:
- einen Notbeleuchtungsmodusschalter (5), der zwischen einen zweiten Anschluss des Induktors (9) und den anderen (3') der Ausgangsanschlüsse (3, 3') geschaltet ist,
wobei, wenn die Batterie (2) über einen Pluspol mit dem einen (3) der Ausgangsanschlüsse (3, 3') und über einen Minuspol mit dem zweiten Anschluss des Induktors (9) verbunden ist, der Notbeleuchtungsmodusschalter (5) konfiguriert ist zum:
- Trennen der Batterie (2) von der Massereferenz in einem Lademodus der Batterie (2), und
- Verbinden der Batterie (2) mit der Massereferenz in einem Notbeleuchtungsmodus, so dass eine LED-Wandlerstufe (6), die mit den Ausgangsanschlüssen (3, 3') verbunden werden kann, von der Batterie (2) versorgt wird.

2. Abwärtswandler nach Anspruch 1,
wobei die Steuerschaltung (15) dazu konfiguriert ist, ein Signal auf dem Rückkopplungspfad als ein Signal auszuwerten, das den Strom durch den Abwärtsschalter (4) anzeigt, wenn die Steuerschaltung (15) den Abwärtsschalter (4) so steuert, dass er leitend ist, indem sie das Signal mit einem Ausschaltschwellenwert vergleicht.

3. Abwärtswandler nach Anspruch 1 oder 2,
wobei die Steuerschaltung dazu konfiguriert ist, ein Signal auf dem Rückkopplungspfad als ein Signal auszuwerten und abzutasten, das die DC-Busspannung in dem Zeitraum anzeigt, der der Steuerung des Abwärtsschalters in den nichtleitenden Zustand folgt.

4. Abwärtswandler nach Anspruch 3,
wobei die Steuerschaltung dazu konfiguriert ist, das Signal auf dem Rückkopplungspfad als ein Signal auszuwerten und abzutasten, das die DC-Busspannung minus die Batteriespannung anzeigt, wenn der Strom durch die Batterie auf null abgefallen ist.

5. LED-Wandler, umfassend einen Abwärtswandler nach einem der vorstehenden Ansprüche und mindestens eine LED, die dazu konfiguriert ist, ausgehend von der Batteriespannung versorgt zu werden.

6. Verfahren zum Betreiben eines Abwärtswandlers zur Versorgung einer Batterie (2),
wobei der Abwärtswandler umfasst:
- eine Reihenschaltung einer Diode (8) und eines Abwärtsschalters (4), wobei die Reihenschaltung zwischen eine DC-Busspannung (V_{DC}) und eine Massereferenz geschaltet ist, wobei die Kathode der Diode (8) mit der DC-Busspannung (V_{DC}) verbunden ist und die Anode der Diode (8) mit dem Abwärtsschalter (4) verbunden ist,
- einen Induktor (9), der an seinem ersten Anschluss mit einem Verbindungspunkt zwischen der Diode (8) und dem Abwärtsschalter (4) verbunden ist,
- eine Reihenschaltung von zwei Widerständen (11, 12), die parallel zu dem Abwärtsschalter (4) geschaltet sind,
- eine Steuerschaltung (15) zum Steuern des Abwärtsschalters (4),
- zwei Ausgangsanschlüsse (3, 3'), wobei einer (3) der Ausgangsanschlüsse (3, 3') mit der DC-Busspannung (V_{DC}) VERBUNDEN IST und der andere (3') der Ausgangsanschlüsse (3, 3') mit der Massereferenz verbunden ist,
**dadurch gekennzeichnet, dass** er ferner umfasst:
- einen Notbeleuchtungsmodusschalter (5), der zwischen einen zweiten Anschluss des Induktors (9) und den anderen (3') der Ausgangsanschlüsse (3, 3') geschaltet ist,
wobei das Verfahren umfasst:
- Steuern des Abwärtsschalters (4) auf der Basis eines Signals auf einem Rückkopplungspfad, der von einem Verbindungspunkt zwischen den Widerständen (11, 12) mit der Steuerschaltung (15) verbunden ist, und, wenn die Batterie (2) über einen Pluspol mit dem einen (3) der Ausgangsanschlüsse (3, 3') und über einen Minuspol mit dem zweiten Anschluss des Induktors (9) verbunden ist, Steuern des Notbeleuchtungsschalters (5) zum:
- Trennen der Batterie (2) von der Massereferenz in einem Lademodus der Batterie (2), und
- Verbinden der Batterie (2) mit der Massereferenz in einem Notbeleuchtungsmodus, so dass eine LED-Wandlerstufe (6), die mit den Ausgangsanschlüssen (3, 3') verbunden werden kann, von der Batterie (2) versorgt wird.

7. Steuerschaltung (15), die dazu konfiguriert ist, ein Verfahren nach Anspruch 6 zu implementieren.

## Revendications

1. Convertisseur abaisseur pour alimenter une batterie (2),
comprenant :
- une connexion en série d'une diode (8) et d'un commutateur abaisseur (4), la connexion en série étant connectée entre une tension de bus CC (V_{DC}) et une référence de masse, dans lequel la cathode de la diode (8) est connectée à la tension de bus CC (V_{DC}) et l'anode de la diode (8) est connectée au commutateur abaisseur (4),
- un inducteur (9) connecté au niveau de sa première borne à un point de connexion entre la diode (8) et le commutateur abaisseur (4),
- une connexion en série de deux résistances (11, 12) connectées en parallèle au commutateur abaisseur (4),
- un ensemble de circuits de commande (15) pour commander le commutateur abaisseur (4),
dans lequel un chemin de rétroaction est connecté à partir d'un point de connexion entre les résistances (11, 12) à l'ensemble de circuits de commande (15),
- deux bornes de sortie (3, 3'), dans lequel une (3) des bornes de sortie (3, 3') est connectée à la tension de bus CC (V_{DC}) et l'autre (3') des bornes de sortie (3, 3') est connectée à la référence de masse,
**caractérisé en ce qu'**il comprend en outre
- un commutateur de mode d'éclairage de secours (5) connecté entre une deuxième borne de l'inducteur (9) et l'autre (3') des bornes de sortie (3, 3'),
dans lequel, lorsque la batterie (2) est connectée avec un pôle positif à l'une (3) des bornes de sortie (3, 3') et avec un pôle négatif à la deuxième borne de l'inducteur (9), le commutateur de mode d'éclairage de secours (5) est configuré pour :
- déconnecter la batterie (2) de la référence de masse dans un mode de chargement de la batterie (2) et
- connecter la batterie (2) à la référence de masse dans une mode d'éclairage de secours de façon à alimenter à partir de la batterie (2) un étage de convertisseur à DEL (6) pouvant être connecté aux bornes de sortie (3, 3').

2. Convertisseur abaisseur selon la revendication 1,
dans lequel l'ensemble de circuits de commande (15) est configuré pour évaluer un signal sur le chemin de rétroaction en tant que signal indiquant le courant à travers le commutateur abaisseur (4) lorsque l'ensemble de circuits de commande (15) commande le commutateur abaisseur (4) pour être conducteur, en le comparant à un seuil de déconnexion.

3. Convertisseur abaisseur selon la revendication 1 ou 2,
dans lequel l'ensemble de circuits de commande est configuré pour évaluer et échantillonner un signal sur le chemin de rétroaction en tant que signal indiquant la tension de bus CC dans la période suivant la commande du commutateur abaisseur dans l'état non conducteur.

4. Convertisseur abaisseur selon l'un quelconque de la revendication 3,
dans lequel l'ensemble de circuits de commande est configuré pour évaluer et échantillonner le signal sur le chemin de rétroaction en tant que signal indiquant la tension de bus CC moins la tension de batterie lorsque le courant à travers la batterie est tombé à zéro.

5. Convertisseur à DEL comprenant un convertisseur abaisseur selon l'une quelconque des revendications précédentes et au moins une DEL qui est configurée pour être alimentée en partant de la tension de batterie.

6. Procédé de fonctionnement d'un convertisseur abaisseur pour alimenter une batterie (2), le convertisseur abaisseur comprenant :
- une connexion en série d'une diode (8) et d'un commutateur abaisseur (4), la connexion en série étant connectée entre une tension de bus CC (V_{DC}) et une référence de masse, dans lequel la cathode de la diode (8) est connectée à la tension de bus CC (V_{DC}) et l'anode de la diode (8) est connectée au commutateur abaisseur (4),
- un inducteur (9) connecté au niveau de sa première borne à un point de connexion entre la diode (8) et le commutateur abaisseur (4),
- une connexion en série de deux résistances (11, 12) connectées en parallèle au commutateur abaisseur (4),
- un ensemble de circuits de commande (15) pour commander le commutateur abaisseur (4),
- deux bornes de sortie (3, 3'), dans lequel une (3) des bornes de sortie (3, 3') est connectée à la tension de bus CC (V_{DC}) et l'autre (3') des bornes de sortie (3, 3') est connectée à la référence de masse,
**caractérisé en ce qu'**il comprend en outre
- un commutateur de mode d'éclairage de secours (5) connecté entre une deuxième borne de l'inducteur (9) et l'autre (3') des bornes de sortie (3, 3'), le procédé comprenant :
- la commande du commutateur abaisseur (4) sur la base d'un signal sur un chemin de rétroaction connecté d'un point de connexion entre les résistances (11, 12) à l'ensemble de circuits de commande (15) et, lorsque la batterie (2) est connectée avec un pôle positif à l'une (3) des bornes de sortie (3, 3') et avec un pôle négatif à la deuxième borne de l'inducteur (9), la commande du commutateur d'éclairage de secours (5) pour :
- déconnecter la batterie (2) de la référence de masse dans un mode de chargement de la batterie (2) et
- connecter la batterie (2) à la référence de masse dans une mode d'éclairage de secours de façon à alimenter à partir de la batterie (2) un étage de convertisseur à DEL (6) pouvant être connecté aux bornes de sortie (3, 3').

7. Ensemble de circuits de commande (15) configuré pour implémenter un procédé selon la revendication 6.
